# EUROPEAN PATENT APPLICATION

(11) **EP 4 614 141 A1**
(43) Date of publication of application: **10.09.2025**
(21) Application number: 23885527.4
(22) Date of filing: 17.10.2023
(51) Int. Cl.: G01N 30/46, G01N 30/32

(54) **METHOD FOR CONTROLING LIQUID CHROMATOGRAPH AND LIQUID CHROMATOGRAPH**

(30) Priority: 31.10.2022 JP 2022174101
(71) Applicant: HITACHI HIGH-TECH CORPORATION, Tokyo 105-6409 (JP)
(72) Inventor: SAKAMOTO Katsuhiko, Tokyo 105-6409 (JP); YAMADA Takumi, Tokyo 105-6409 (JP); SAKAMOTO Naoto, Tokyo 105-6409 (JP)
(74) Representative: Strehl & Partner mbB
(86) International application number: PCT/JP2023/037573
(87) International publication number: WO 2024/095765

(57) **Abstract**

In a liquid chromatogram, a conflict between a separation column replacement process and a scheduled analytical operation is easily avoided. A method for controlling a liquid chromatograph includes a plurality of flow channels which shares a liquid feeding device and in which separation columns are respectively provided. The method for controlling a liquid chromatograph includes controlling the liquid chromatograph such that, in a process of replacing the separation columns, among steps after a separation column is connected to the flow channel, a step not using the liquid feeding device is performed in parallel with a process using a flow channel not targeted for separation column replacement or is performed so as not to overlap the process, and a step using the liquid feeding device is performed so as not to overlap the process using the flow channel not targeted for the separation column replacement.

## Description

### Technical Field

The present invention relates to a method for controlling a liquid chromatograph and a liquid chromatograph.

### Background Art

The liquid chromatograph is an analyzer for identifying components by taking advantage of their properties that, when a mixed sample solution containing measurement target components is injected into a separation column to which a solvent is continuously fed by a liquid feed pump, cause the components in a sample to interact with the filler and solvent of the separation column in accordance with their chemical properties, and reach a detection level at different times depending on the differences in the interactions between the individual components. As a detector used with the liquid chromatograph, for example, a photometer or a mass spectrometer is appropriately selected in accordance with materials and the purpose of analysis.

Also known are liquid chromatographs that are configured to connect a plurality of separation columns in parallel to a liquid feed pump (Patent Literature 1).

### Citation List

### Patent Literature

Patent Literature 1: International Publication WO 2020/171240

### Summary of Invention

### Technical Problem

However, conventional technologies have a problem in that it is difficult to avoid a conflict between a separation column replacement process and a scheduled analytical operation.

### Solution to Problem

In one example of the liquid chromatograph control method provided by the present invention, a step of using a liquid feeding device, which is one of the steps performed in a separation column replacement process after the connection of the separation column to a flow channel, is performed so as not to overlap with a process of using a flow channel not targeted for the separation column replacement.

This description includes the disclosure of Japanese Patent Application No. 2022-174101, which is a priority document of the present application.

### Advantageous Effects of Invention

The present invention makes it possible to more easily avoid the conflict between the separation column replacement process and the scheduled analytical operation.

### Brief Description of Drawings

[Fig. 1] Fig. 1 illustrates a configuration of a liquid chromatograph according to an embodiment.
[Fig. 2] Fig. 2 is a flowchart illustrating a method for controlling the liquid chromatograph according to the embodiment.
[Fig. 3] Fig. 3 illustrates a schedule for each separation column according to the embodiment.
[Fig. 4] Fig. 4 illustrates a schedule for each separation column according to the embodiment.
[Fig. 5] Fig. 5 illustrates a schedule for each separation column according to the embodiment.
[Fig. 6] Fig. 6 illustrates a schedule for each separation column according to the embodiment.
[Fig. 7] Fig. 7 illustrates an example of a separation column replacement process according to the embodiment.

### Description of Embodiments

Embodiments of the present invention will now be described with reference to the accompanying drawings.

### [First Embodiment]

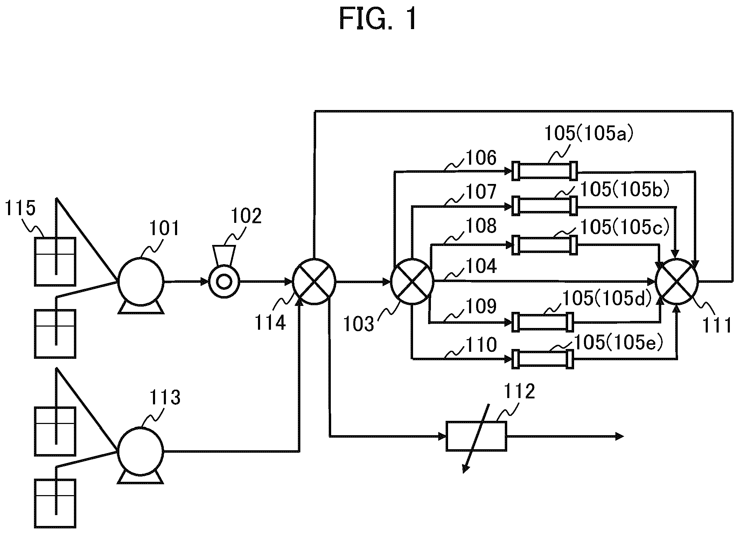

Fig. 1 illustrates a configuration of a liquid chromatograph according to a first embodiment of the present invention. The liquid chromatograph includes flow channels 104 and 106 to 110. A plurality of separation columns 105 (five separation columns are depicted in the example of Fig. 1) are disposed in five flow channels. Specifically, a separation column 105a is disposed in the flow channel 106, a separation column 105b is disposed in the flow channel 107, a separation column 105c is disposed in the flow channel 108, a separation column 105d is disposed in the flow channel 109, and a separation column 105e is disposed in the flow channel 110. No separation column 105 is disposed in the flow channel 104.

The starting end of each flow channel is connected to a flow channel switch valve 103, and the terminating end of each flow channel is connected to a flow channel switch valve 111. The flow channel switch valves 103, 111 are connected to a flow channel switch valve 114. Further, the flow channel switch valve 114 is connected to a detector 112, a liquid feeding device 101 (e.g., a pump), and a liquid feeding device 113 (e.g., a pump). The liquid feeding devices 101, 113 are able to feed different solvents 115 (which may be solutions containing a solute such as a reagent) through the flow channel switch valve 114.

Here, the flow channel switch valve 114 and the liquid feeding device 101 are connected through a sample injection unit 102 so that the sample injection unit 102 is able to inject a sample (i.e., the sample to be tested) into a solvent fed from the liquid feeding device 101. The liquid feeding device 113 feeds a solvent (e.g., cleaning liquid) that does not require the injection of a sample.

The liquid feeding devices 101, 113 inject a mixed sample solution containing measurement target components into the separation columns 105. Different contents (filler and/or solvent) are disposed in the separation columns 105. Individual components of the sample are configured to interact with the different contents of the separation columns 105 in accordance with their chemical properties, and reach the detector 112 at different times depending on the differences in the interactions between the individual components. In the above-described manner, the measurement target components can be detected and/or measured. The detector 112 is, for example, a photometer or a mass spectrometer.

As described above, the liquid chromatograph includes a plurality of flow channels 106-110, which share the liquid feeding devices 101, 113, and the separation columns 105 are disposed in these flow channels, respectively. As is obvious from Fig. 1, there may be a flow channel (e.g., flow channel 104) in which no separation column 105 is disposed.

Although not depicted in Fig. 1, a control device may be provided for controlling the operation of the liquid chromatograph. The control device may control the operation of the liquid chromatograph by executing a method for controlling the liquid chromatograph disclosed in this description.

The configuration of the liquid chromatograph is not limited to that depicted in Fig. 1, and the analytical operation of the liquid chromatograph is not limited to that described above. Those skilled in the art can appropriately design or modify the configuration and operation of the liquid chromatograph based, for example, on known art.

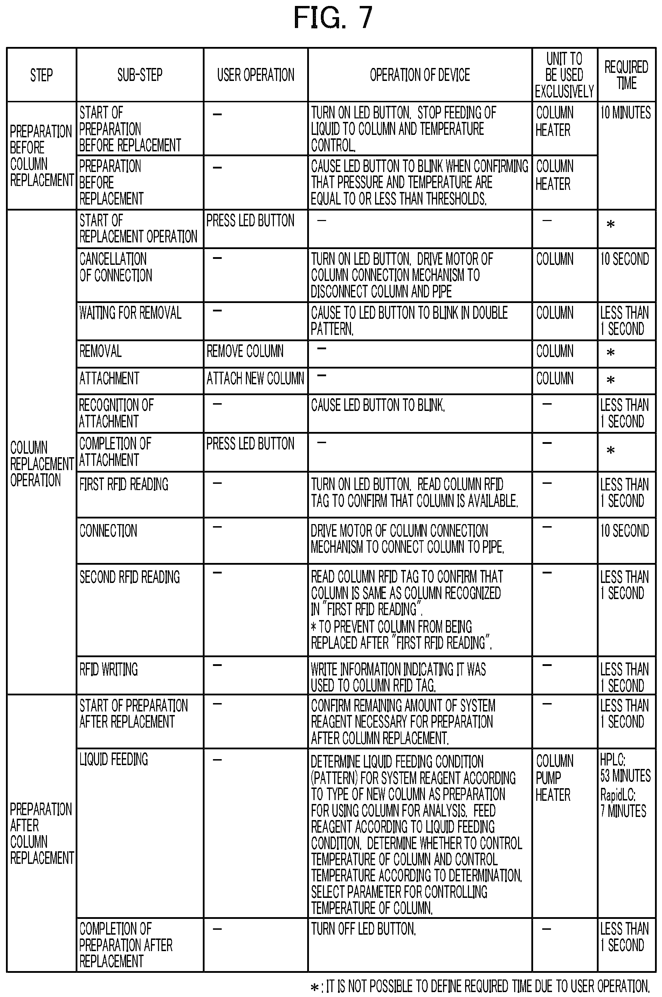

Fig. 7 illustrates an example of a separation column replacement process according to the present embodiment. For simplicity, in Fig. 7, the "separation column" is simply referred to as "column." In order to avoid a situation in which a rapid LC stream is entirely unavailable, the present embodiment is configured in such a manner that the analytical operation can be continued in parallel in a flow channel that is not targeted for the replacement of a separation column 105.

The liquid chromatograph performs separation column replacement in parallel with the analytical operation in a flow channel that is not targeted for separation column replacement. As depicted in Fig. 1, the separation column replacement process needs to use the liquid feeding devices 101, 113, and analytical operation also requires the use of these liquid feeding devices. In the rapid LC stream, a set of liquid feeding devices (liquid feeding device 101 and liquid feeding device 113) is shared by a plurality of (e.g., five) flow channels. Therefore, a conflict occurs between the liquid feeding devices if an attempt is made to perform the entire separation column replacement process in parallel with the analytical operation in a flow channel that is not targeted for separation column replacement.

In view of the above circumstances, the liquid chromatograph is controlled in such manner that a step of using no liquid feeding device, which is one of the steps performed in the separation column replacement process after the connection of a separation column to a flow channel, is performed in parallel with a process (e.g., analytical operation) involving the use of a flow channel not targeted for separation column replacement, and that a step of using a liquid feeding device is performed so as not to overlap with a process of using a flow channel not targeted for separation column replacement.

In the example of Fig. 7, the liquid feeding devices are used only in a step named "Preparation after separation column replacement," which is one of the steps performed in the separation column replacement process. More specifically, the step "Preparation after separation column replacement" includes sub-steps, which are named "Liquid feeding," "Start of preparation after replacement," and "Completion of preparation after replacement," respectively. The sub-step "Liquid feeding" uses a liquid feeding device. The sub-steps "Start of preparation after replacement" and "Completion of preparation after replacement" use no liquid feeding device. Steps named "preparation before column replacement" and "Separation column replacement operation" use no liquid feeding device.

The liquid chromatograph is able to perform a step of using no liquid feeding device in parallel with an operation of analyzing a flow channel not targeted for separation column replacement.

Further, the liquid chromatograph schedules a step of using a liquid feeding device for the nearest free cycle at the time of scheduling (e.g., a cycle that does not overlap with a process involving the use of a flow channel not targeted for separation column replacement).

Examples of scheduling according to the present embodiment are described below.

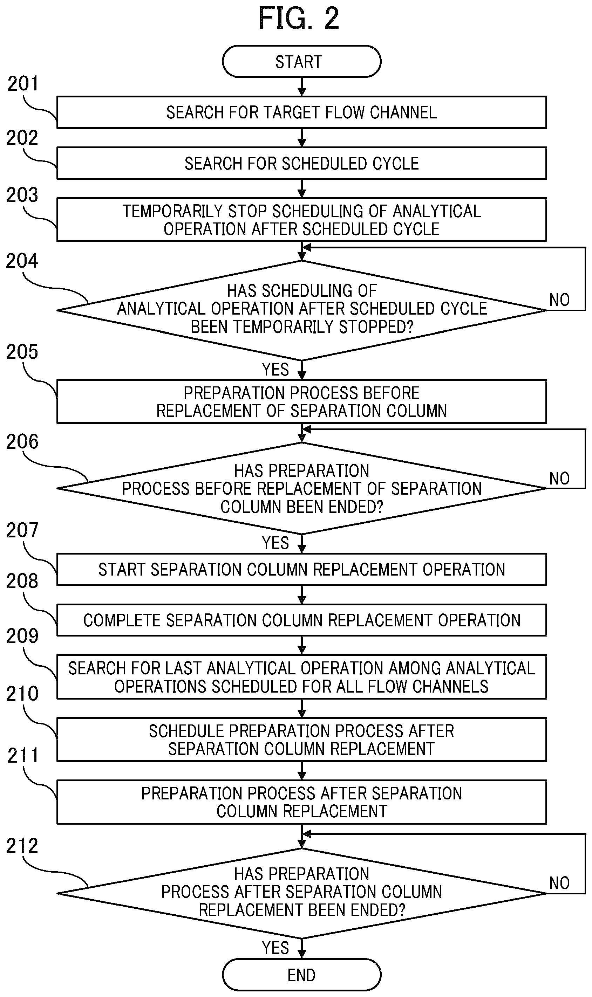

Fig. 2 is a flowchart illustrating the liquid chromatograph control method according to the present embodiment.

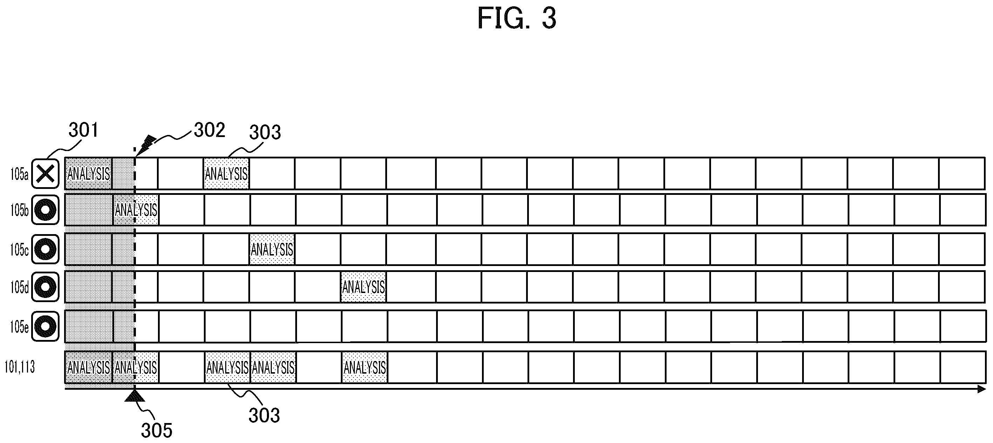

Further, Figs. 3 to 6 illustrate schedules at various times for individual separation columns in the present embodiment. The schedules are created for the five separation columns 105a-105e and the liquid feeding devices 101, 113.

Time progresses from left to right. In Figs. 3 to 6, portions corresponding to elapsed time are depicted in gray. Some "analysis" operations have already been scheduled at certain times depicted in Figs. 3 to 6. The individual analytical operations occupy one of the separation columns 105a-105e and the liquid feeding device 101 or 113, respectively.

The operation depicted in Fig. 2 starts in response to a request for separation column replacement. For example, let us assume that a replacement request 302 is generated for the separation column 105a at a current time 305 depicted in Fig. 3. First, the liquid chromatograph searches for and identifies the flow channel that is specified by the replacement request (step 201).

A process involving the use of the separation column 105a (e.g., an analytical operation in the separation column 105a) is identified as the process involving the use of the flow channel 106 targeted for separation column replacement. Meanwhile, a processing involving the use of one of the separation columns 105b-105e (e.g., an analytical operation in one of the separation columns 105b-105e) is identified as the process involving the use of one of the flow channels 107-110 not targeted for separation column replacement.

Next, the liquid chromatograph searches for and identifies the scheduled cycle (the last one if two or more cycles are scheduled) in the separation column 105a (step 202). In the example of Fig. 3, the cycle of an analytical operation 303 is scheduled.

Next, the liquid chromatograph temporarily stops the scheduling of an analytical operation after the scheduled cycle (step 203). That is to say, the scheduling of new analytical operations after the analytical operation 303 in the separation column 105a is temporarily prohibited. In Fig. 3, for the separation columns 105b-105e marked "∘" to represent an indication of whether or not to permit scheduling 301, a new analytical operation can still be scheduled. Meanwhile, for the separation column 105a marked "×," the scheduling of a new analytical operation is prohibited.

Next, the liquid chromatograph determines whether the scheduling of analytical operations after the scheduled cycle is temporarily stopped (step 204). That is to say, the liquid chromatograph determines whether step 203 has been performed. If the scheduling of analytical operations after the scheduled cycle is not temporarily stopped, the liquid chromatograph repeats step 204.

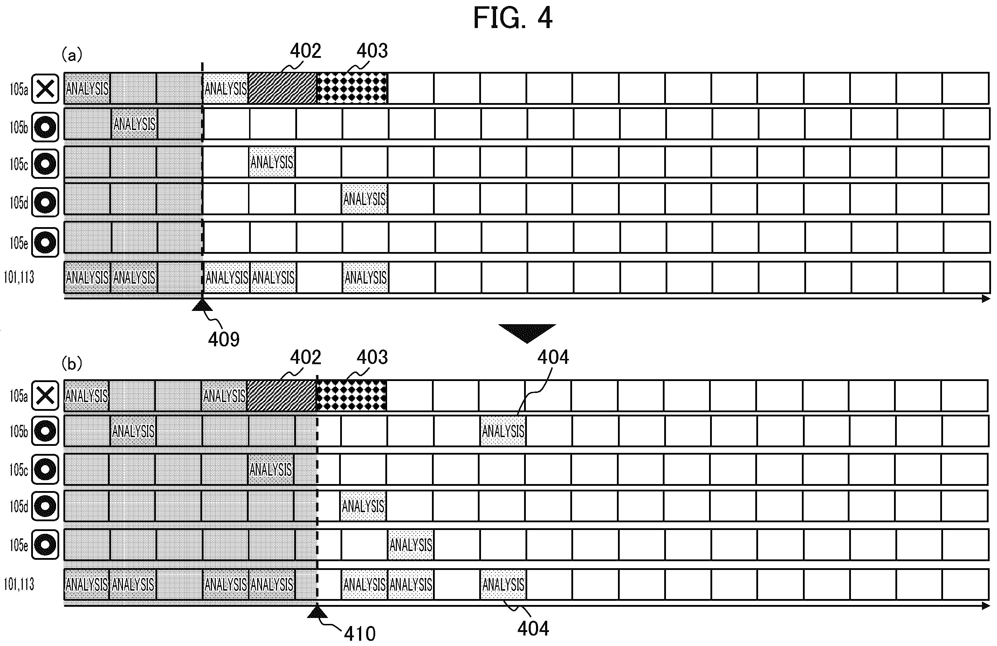

Next, the liquid chromatograph performs a pre-separation-column-replacement preparation process on the separation column 105a (step 205). As depicted in Fig. 4, upon completion of the last analytical operation already scheduled for the separation column 105a (the one searched for in step 202, for example, the analytical operation 303 in Fig. 3), the liquid chromatograph plans a schedule for making a preparation before column replacement 402 and a schedule for performing a column replacement operation 403, and then executes the schedules as time advances.

In the above instance, as depicted in part (a) of Fig. 4, the preparation before column replacement 402 and the column replacement operation 403 are performed in parallel with the analytical operation involving the use of the flow channels 107-110 not targeted for separation column replacement (it is obvious that such operations may be performed so as not to overlap with the analytical operation).

Further, during the above period of time, the analytical operation and the scheduling of the analytical operation can be continuously performed in the flow channels 107-110 (related to the separation columns 105b-105e) not targeted for separation column replacement. In the example of Fig. 4, as time progresses from a current time 409 in part (a) of Fig. 4 to a current time 410 in part (b) of Fig. 4, a new analytical operation (e.g., an analytical operation 404 in the separation column 105b) is scheduled.

Next, the liquid chromatograph determines whether the pre-separation-column-replacement preparation process is ended (step 206). If the pre-separation-column-replacement preparation process is not ended, the liquid chromatograph repeats step 206.

Meanwhile, if the pre-separation-column-replacement preparation process is ended, the liquid chromatograph performs the separation column replacement operation (step 207). This results in the replacement of the separation column 105a.

Next, the liquid chromatograph confirms that the separation column replacement operation is completed (step 208). If the separation column replacement operation is not completed, the liquid chromatograph may wait until the completion of step 208.

Next, the liquid chromatograph searches for and identifies the last one of the scheduled analytical operations in all the flow channels (step 209). In the example of part (b) of Fig. 4, the analytical operation 404 is the last one of all the scheduled analytical operations.

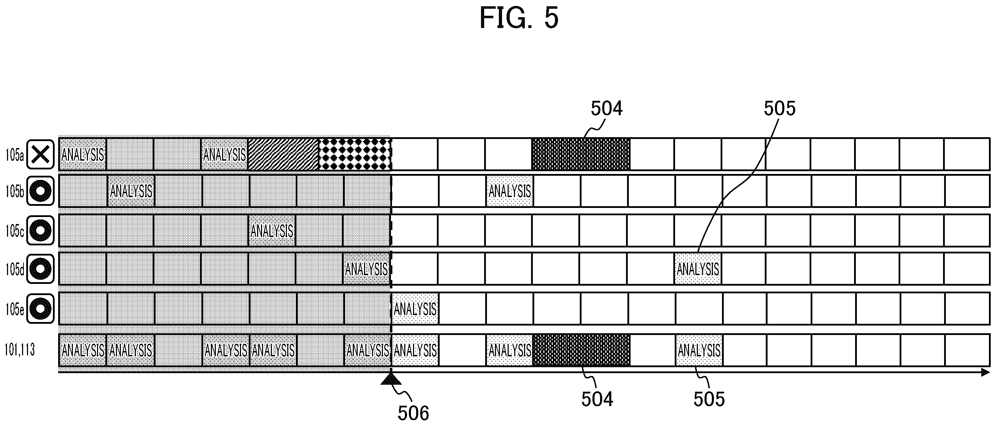

Next, the liquid chromatograph plans a schedule for a preparation process after separation column replacement so that it is performed after the analytical operation 404 identified in step 209 (step 210). As depicted, for example, in Fig. 5, a future preparation after separation column replacement 504 is scheduled at a current time 506. The preparation after separation column replacement 504 occupies the liquid feeding device 101 or 113.

A liquid feeding device is occupied when the preparation after separation column replacement 504 is scheduled for the liquid feeding device. Therefore, for a cycle of making the preparation after separation column replacement, the analytical operation cannot be scheduled for the separation column 105a and the other separation columns 105b-105e. For a cycle after the end of the preparation after separation column replacement 504, the analytical operation can be scheduled (e.g., an analytical operation 505 depicted in Fig. 5).

Next, the liquid chromatograph performs a preparation process after replacement (step 211). As is obvious from Fig. 2, step 211 is performed after separation column replacement (i.e., after step 208). Stated differently, the preparation process after replacement is a step performed after the column replacement operation 403 (i.e., a step performed after a new separation column is connected to a flow channel).

A step of starting the preparation process after separation column replacement (the sub-step "Start of preparation after replacement" in Fig. 7, namely, a step of using no liquid feeding device) includes a step of determining whether the remaining volume of system reagents is sufficient. The remaining volume of system reagents can be detected by using, for example, a remaining volume detection device provided in a container. Further, whether the remaining volume of system reagents is sufficient can be determined, for example, by comparing it with the volume of system reagents required for the subsequent sub-step "Liquid feeding."

If the remaining volume of system reagents is sufficient, the processing proceeds to subsequent step 212. Meanwhile, if the remaining volume of system reagents is not sufficient, the preparation process after separation column replacement may not be performed. In such a case, therefore, the liquid chromatograph may prompt a user to take an appropriate action by outputting warning information indicating that the remaining volume of system reagents is insufficient.

Performing the above-described determination process makes it possible to avoid or warn of a situation where the preparation process after separation column replacement is not normally performed.

In the liquid feeding step (the sub-step "Liquid feeding" in Fig. 7, namely, the step involving the use of a liquid feeding device) of the preparation process after separation column replacement, the liquid chromatograph may recognize the type of separation column newly installed upon separation column replacement, and may determine liquid feeding conditions for the system reagents in accordance with the recognized type. The details of the liquid feeding conditions can be defined as appropriate by those skilled in the art, and include, for example, flow rate and liquid feeding time. The liquid chromatograph then feeds the system reagents in accordance with the determined liquid feeding conditions, and feeds the system reagents to the newly installed separation column. Exercising the above-described control makes it possible to perform processing under suitable conditions in accordance with the types of various separation columns.

The liquid feeding conditions regarding the system reagents may be defined as multiple patterns. In such a case, the liquid feeding conditions regarding the system reagents are determined by selecting one of the multiple patterns in accordance with the type of the newly installed separation column. When the liquid feeding conditions are determined in the manner described above in a case where there are many different types of separation columns, the liquid feeding conditions can be set efficiently without having to define the individual liquid feeding conditions for all the separation columns.

Further, the liquid feeding step of the preparation process after separation column replacement may include a step of exercising temperature control until the new separation column reaches a predetermined temperature.

When the above-described temperature control is exercised, the next analytical operation is performed under more suitable conditions to improve analytical accuracy and/or efficiency.

Furthermore, the liquid feeding step of the preparation process after separation column replacement (the sub-step "Liquid feeding" in Fig. 7, that is, the step involving the use of a liquid feeding device) may include a step of determining whether or not to exercises separation column temperature control and a step of selecting temperature control parameters in a case where separation column temperature control is exercised.

For example, in accordance with the type of the newly installed separation column, the liquid chromatograph may determine whether or not to exercise separation column temperature control. Moreover, in the case where separation column temperature control is exercised, the liquid chromatograph may select the temperature control parameters in accordance with the type of the newly installed separation column.

When the above-described temperature control is exercised, the next analytical operation is performed at a more suitable temperature to improve the analytical accuracy and/or efficiency.

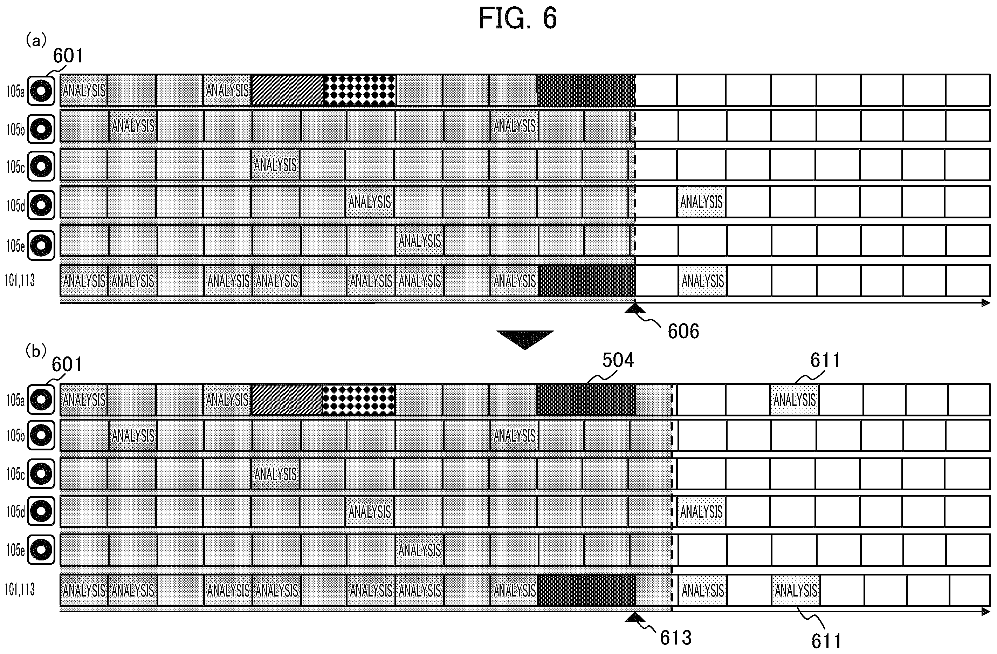

After completion of step 211, the liquid chromatograph determines whether the preparation process after separation column replacement is ended (step 212). If the preparation process after separation column replacement is not ended, the liquid chromatograph repeats step 212. At this point of time, the current time is a current time 606 depicted in part (a) of Fig. 6. When the preparation process after separation column replacement ends, the liquid chromatograph ends the processing depicted in Fig. 2.

A temporary stop process (prohibition of scheduling of the new analysis operations) generated in step 203 is canceled at the end of the processing depicted in Fig. 2. In Fig. 6, an indication of whether or not to permit scheduling 601 for the separation column 105a is changed from "×" to "∘" to indicate that a new analytical operation can be scheduled for the separation column 105a. For example, as the current time progresses from the current time 606 in part (a) of Fig. 6 to a current time 613 in part (b) of Fig. 6, a new analytical operation 611 is scheduled. As is obvious from Figs. 4 and 6, the analytical operation 611 is performed in a step subsequent to the column replacement operation 403 (i.e., a step subsequent to the connection of a new separation column to a flow channel).

In the above instance, the analytical operation involving the use of the flow channels 107-110 not targeted for separation column replacement (the flow channels related to the separation columns 105b-105e) can be performed either before or after the preparation process after separation column replacement. Meanwhile, the process involving the use of the flow channel 106 targeted for separation column replacement (the flow channel related to the separation column 105a) cannot be performed before the preparation process after separation column replacement, and is thus performed after the preparation after separation column replacement 504, as is the case with the analytical operation 611. In the above-described manner, it is possible to prevent an analytical operation from being scheduled for a flow channel in which a separation column is being replaced.

As described above, the liquid chromatograph control method and liquid chromatograph according to the present embodiment make it possible to perform separation column replacement without stopping the analytical operations performed on the entire rapid LC stream and the scheduling of the analytical operations. Stated differently, the liquid chromatograph control method and liquid chromatograph according to the present embodiment make it possible to more easily avoid a conflict between a separation column replacement process and a scheduled analytical operation.

The liquid chromatograph control method and liquid chromatograph according to the present embodiment make it possible to solve the following problems in conventional liquid chromatographs.

When a sample arrives, conventional automatic analyzers schedule analysis items requested for the sample, and perform analytical operations in accordance with an operational plan determined at this time.

Two streams, namely, an HPLC and a rapid LC, are provided in a liquid chromatography section (LC section), and are used in different configurations. Therefore, it is necessary to perform scheduling of separation column replacement in a manner appropriate for each type of stream. The method (addition method) adopted for HPLC is to schedule separation column replacement after the last scheduled analytical operation.

The scheduling is performed to schedule the timing of use of each unit employed for a target analysis item and the amount of use of each consumable. The device manages the expiration date and remaining number of uses of a separation column. Therefore, the device does not register the analytical operation for a target stream line after the separation column becomes unusable.

Consequently, when separation column replacement is performed based on a determination made by the device, no conflict occurs between the separation column replacement process and the scheduled analytical operation.

However, separation column replacement at user discretion is requested at a timing desired by the user without regard to the expiration date or remaining number of uses of a target separation column. Therefore, when separation column replacement is requested, there may be a case where a conflict occurs with the separation column replacement process due to an analytic operation already registered in the target stream line.

A separation column is a part of a stream line, and the same units are used for separation column replacement as for analytical operations. Therefore, separation column replacement and analytical operation cannot be performed simultaneously in the target stream line.

As described above, conventional technologies have a problem in that it is difficult to avoid a conflict between the separation column replacement process and the scheduled analytical operation.

Consequently, it is beneficial to avoid a conflict between the separation column replacement process and the scheduled analytical operation in a case where separation column replacement is requested during operation.

The liquid chromatograph control method and liquid chromatograph according to the present embodiment make it possible to more easily avoid the conflict between the separation column replacement process and the scheduled analytical operation.

For example, separation column replacement suitable for the configuration of the rapid LC can be scheduled without the cancellation of analysis. This may make it possible to perform separation column replacement without stopping testing, avoid an increase in the consumption of samples or consumables, suppress a decrease in the throughput of the device, and ultimately contribute to reducing waiting times for patients and allowing medical staff to work smoothly.

### List of Reference Signs

101: Liquid feeding device
102: Sample injection unit
103: Flow channel switch valve
105 (105a to 105e): Separation column
104, 106 to 110: Flow channel
111: Flow channel switch valve
112: Detector
113: Liquid feeding device
114: Flow channel switch valve
115: Solvent
301: Indication of whether or not to permit scheduling
302: Replacement request
303: Analytical operation
305: Current time
402: Preparation before column replacement
403: Column replacement operation
404: Analytical operation (process using flow channel not targeted for replacement of separation column)
409: Current time
410: Current time
504: Preparation after separation column replacement (step after new separation column is connected to flow channel)
505: Analytical operation (process using flow channel not targeted for separation column replacement)
506: Current time
601: Indication of whether or not to permit scheduling 606: Current time 611: Analytical operation
613: Current time

All publications, patents, and patent applications cited herein are hereby incorporated by reference in their entirety.

## Claims

1. A method for controlling a liquid chromatograph that includes a plurality of flow channels which shares a liquid feeding device and in which separation columns are respectively provided, the method comprising controlling the liquid chromatograph such that,
in a process of replacing the separation columns, among steps after a separation column is connected to the flow channel,
a step not using the liquid feeding device is performed in parallel with a process using a flow channel not targeted for separation column replacement or is performed so as not to overlap the process, and
a step using the liquid feeding device is performed so as not to overlap the process using the flow channel not targeted for the separation column replacement.

2. The method for controlling the liquid chromatograph according to claim 1, wherein
in the process of replacing the separation columns, the process using the flow channel not targeted for the separation column replacement is performed before or after the step using the liquid feeding device, and
a process using a flow channel targeted for the separation column replacement is performed after the step using the liquid feeding device.

3. The method for controlling the liquid chromatograph, wherein
the step not using the liquid feeding device includes a step of determining whether a remaining amount of a system reagent is sufficient after replacement of a separation column.

4. The method for controlling the liquid chromatograph according to claim 1, wherein
the step using the liquid feeding device includes
a step of determining a liquid feeding condition for a system reagent according to a type of a separation column newly set by the separation column replacement, and
a step of feeding a system reagent to the newly set separation column based on the determined liquid feeding condition.

5. The method for controlling the liquid chromatograph according to claim 4, wherein
the liquid feeding condition for the system reagent is defined as a plurality of patterns, and
in the step of determining the liquid feeding condition for the system reagent, the liquid feeding condition is determined by selecting one of the plurality of patterns according to the type of the separation column newly set by the separation column replacement.

6. The method for controlling the liquid chromatograph according to claim 1, wherein
the step using the liquid feeding device includes a step of controlling a temperature of a separation column to a predetermined temperature after the replacement of the separation columns.

7. The method for controlling the liquid chromatograph according to claim 1, wherein
the step using the liquid feeding device includes
a step of determining whether to control a temperature of a separation column after the replacement of the separation columns, and
a step of selecting a temperature control parameter in a case where the temperature of the separation column is controlled.

8. A liquid chromatogram comprising a plurality of flow channels which shares a liquid feeding device and in which separation columns are respectively provided, wherein
in a process of replacing the separation columns, among steps after a separation column is connected to the flow channel,
a step not using the liquid feeding device is performed in parallel with a process using a flow channel not targeted for separation column replacement or is performed so as not to overlap the process, and
a step using the liquid feeding device is performed so as not to overlap the process using the flow channel not targeted for the separation column replacement.
